# EUROPEAN PATENT SPECIFICATION

(11) **EP 4 008 895 B1**
(45) Date of publication and mention of the grant of the patent: **10.09.2025**
(21) Application number: 20383056.7
(22) Date of filing: 03.12.2020
(51) Int. Cl.: F03D 13/40

(54) **ROOT PORTION FOR A WIND TURBINE BLADE**
WURZELABSCHNITT FÜR EINE WINDTURBINENSCHAUFEL
PORTION DE PIED D'UNE PALE DE TURBINE ÉOLIENNE

(43) Date of publication of application: 08.06.2022
(73) Proprietor: General Electric Renovables España S.L., 08005 Barcelona (ES)
(72) Inventor: TRAVERS, Alexis, 44200 Nantes (FR); SONETHAVY, Sisouvanh, 44200 Nantes (FR)
(74) Representative: Bardehle Pagenberg S.L.

(56) References cited:
- EP-A1- 2 458 200
- EP-A1- 2 981 717
- EP-A1- 3 543 524
- EP-B1- 2 458 200
- EP-B1- 2 981 717
- US-A1- 2020 332 771

## Description

### FIELD

The present disclosure relates to a root portion for a wind turbine blade, to a wind turbine blade comprising such a root portion and to methods for positioning, and for transporting and storing said wind turbine blade.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

The storage and transport of wind turbine blades has become more and more of a challenging task due to the general tendency to increase the size of modern wind turbines and a corresponding increase in the size and weight of the blades. Blades of modern wind turbines may be more than 70 or 80 meters, or even more than 100 meters long. Before installation, and after manufacture, the wind turbine blades may have to be temporarily stored and further transported to the installation site. Once the blades have been transported to the installation site or to the wind park which may be offshore, the wind turbine blades may be hoisted towards the rotor hub.

.In the art, blade-specific support cradles may be provided on respective transport and/or storage means. Those blade-specific support cradles are adapted to the outer shape of the blade (at the root and/or tip portion) and are intended to receive the blade under a pre-defined orientation. However, blade-specific support cradles are expensive and require extensive retooling of respective the transport and/or storage means, in case different types of turbine blades shall be transported or stored.

Further, in the art, circular-bow-shaped support cradles are used. When using said circular-bow-shaped support cradles the blade can be received under substantially any angular orientation. However, since the blades may have a significant curvature, including twist and sweep, and in order to be able to correctly support a tip portion of a blade, the blade root needs to be positioned in the cradle at a given orientation rather precisely.

As the root portion of a turbine blade typically has a substantially circular shape, it is difficult to place the root portion of the turbine blade exactly under a pre-defined angular orientation, to achieve the desired angular orientation of the tip portion. This is particularly, if the tolerances for orientating the tip portion must be set low, to avoid transporting and/or storing damages.

Document EP3543524 A1 discloses a root end element for attachment to a root end of a wind turbine being configured to support the root end of the wind turbine blade. The present disclosure provides a root portion for a wind turbine blade, a turbine blade and a method for transporting and/or storing a wind turbine blade that resolve the aforementioned disadvantages, at least partially.

### SUMMARY

In a first aspect of the present disclosure, a root portion for a wind turbine blade, comprising a coupling flange, configured for coupling the root portion to a hub of a wind turbine, and at least one support element, fixedly attached to the coupling flange, is provided, wherein the at least one support element defines a support plane for contacting a transport and/or storing surface, and wherein the at least one support element is welded to the coupling flange or wherein the at least one support element and the coupling flange are integrally formed.

The term support element as used throughout the present disclosure should be regarded as any structure that because of material properties, structure, or shape contributes to the formation of a support plane. The transport and/or storing surface is typically provided on a transport and/or storing means, that is different from the root portion and the wind turbine blade. The transport and/or storing surface as used throughout the present disclosure can be any surface, particularly flat surface, that is supports the root portion and/or the wind turbine blade during transport and storing, as it comes into contact with the support plane, defined by the at least one support element.

Since the support element is fixedly attached to the coupling flange, the support plane is fixed with respect to the root of the blade. A blade may thus be placed or positioned on a support element, a fixture or the floor or ground, and the support plane ensures that this occurs in a given orientation of the blade, thereby making sure that also a tip portion may be suitable supported if necessary.

In another aspect, a wind turbine blade comprising a blade root, the blade root having a coupling flange, configured for coupling the root to a hub of a wind turbine, the coupling flange comprising one or more support elements, which define a substantially flat support area for contacting a transport and/or storing surface.

In accordance with this aspect, a flat support area is thus incorporated in the wind turbine blade, such that a blade cam simply be placed on a floor or ground area with a known orientation of the blade.

In yet a further aspect, a method for positioning a wind turbine blade is provided. The method comprises providing a wind turbine blade comprising a blade root mounting flange defining an annular mounting surface for mounting the wind turbine blade to a hub of a wind turbine, the blade root mounting flange comprising one or more portions protruding beyond the annular mounting surface. The method comprises placing the wind turbine blade on a storing surface so as to be supported by the portions of the mounting flange protruding beyond the annular mounting flange, wherein the one or more portions protruding beyond the annular mounting surface are welded to the blade root mounting flange or the one or more portions protruding beyond the annular mounting surface and the blade root mounting flange are integrally formed.

The terms coupling flange and mounting flange are used interchangeably herein. The term coupling flange or mounting flange is used to denote a part of a root portion of a wind turbine blade which is used to attached to another component of a wind turbine, and in particular, the wind turbine hub or a pitch bearing of the wind turbine hub.

### BRIEF DESCRIPTION OF THE DRAWINGS

In the following, aspects of the present disclosure are described in detail, with respect to the accompanying figures.
- Fig. 1: schematically illustrates a perspective view of one example of a wind turbine;
- Fig. 2: schematically illustrates a simplified, internal view of one example of the nacelle of the wind turbine of the Figure 1;
- Fig. 3: schematically illustrates an example of a root portion of a wind turbine blade;
- Figs. 4A - 4D: schematically illustrate further examples of a root portion with different support elements;
- Fig. 5: schematically illustrates an example of a wind turbine blade; and
- Fig. 6: schematically illustrates a flow diagram of an example of a method for positioning a wind turbine blade.

### DETAILED DESCRIPTION OF EXAMPLES

Reference now will be made in detail to embodiments of the invention, one or more examples of which are illustrated in the drawings. Each example is provided by way of explanation of the invention, not as a limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

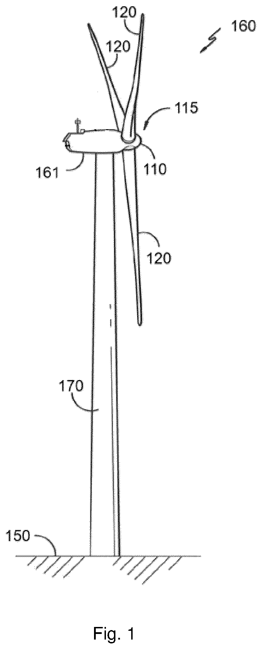

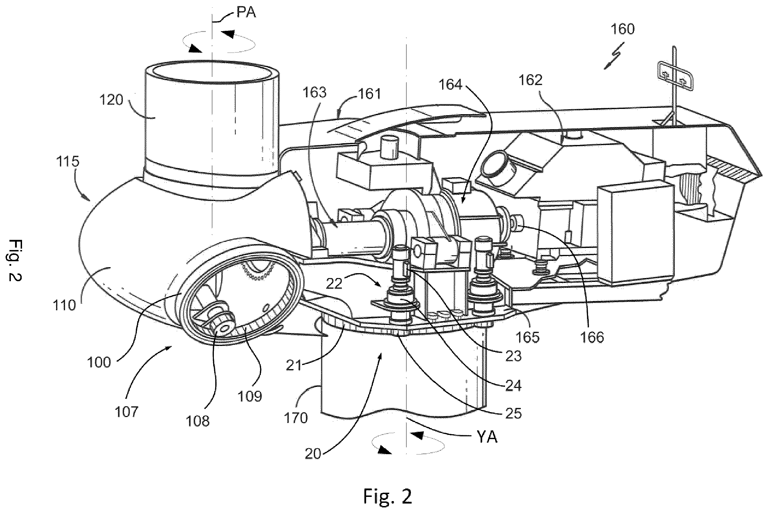

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated embodiment, the rotor 115 includes three rotor blades 120. However, in an alternative embodiment, the rotor 115 may include more or less than three rotor blades 120. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator 162 (Figure 2) positioned within the nacelle 161 to permit electrical energy to be produced.

Figure 2 illustrates a simplified, internal view of one example of the nacelle 161 of the wind turbine 160 of the Figure 1. As shown, the generator 162 may be disposed within the nacelle 161. In general, the generator 162 may be coupled to the rotor 115 of the wind turbine 160 for generating electrical power from the rotational energy generated by the rotor 115. For example, the rotor 115 may include a main rotor shaft 163 coupled to the hub 110 for rotation therewith. The generator 162 may then be coupled to the rotor shaft 163 such that rotation of the rotor shaft 163 drives the generator 162. For instance, in the illustrated embodiment, the generator 162 includes a generator shaft 166 rotatably coupled to the rotor shaft 163 through a gearbox 164.

It should be appreciated that the rotor shaft 163, gearbox 164, and generator 162 may generally be supported within the nacelle 161 by a support frame or bedplate 165 positioned atop the wind turbine tower 170.

The nacelle 161 is rotatably coupled to the tower 170 through the yaw system 20 in such a way that the nacelle 161 is able to rotate about a yaw axis YA. The yaw system 20 comprises a yaw bearing having two bearing components configured to rotate with respect to the other. The tower 170 is coupled to one of the bearing components and the bedplate or support frame 165 of the nacelle 161 is coupled to the other bearing component. The yaw system 20 comprises an annular gear 21 and a plurality of yaw drives 22 with a motor 23, a gearbox 24 and a pinion 25 for meshing with the annular gear 21 for rotating one of the bearing components with respect to the other.

Blades 120 are coupled to the hub 110 with a pitch bearing 100 in between the blade 120 and the hub 110. The pitch bearing 100 comprises an inner ring and an outer ring. A wind turbine blade may be attached either at the inner bearing ring or at the outer bearing ring, whereas the hub is connected at the other. A blade 120 may perform a relative rotational movement with respect to the hub 110 when a pitch system 107 is actuated. The inner bearing ring may therefore perform a rotational movement with respect to the outer bearing ring. The pitch system 107 of Figure 2 comprises a pinion 108 that meshes with an annular gear 109 provided on the inner bearing ring to set the wind turbine blade into rotation around a pitch axis PA.

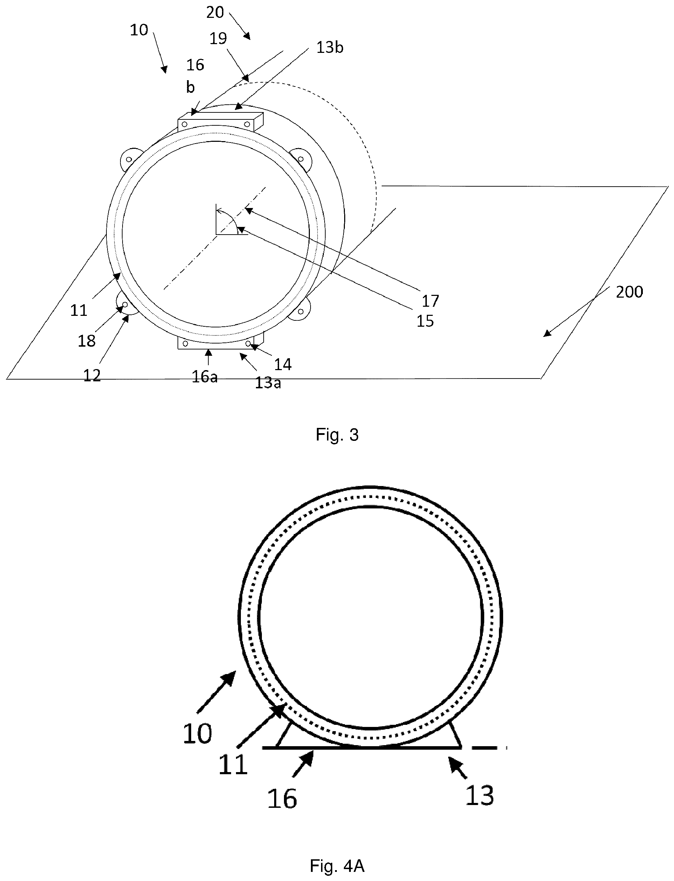

Figure 3 illustrates an example of a root portion 10 for a wind turbine blade 120 comprising a coupling flange 11. The coupling flange 11 is configured for coupling the root portion to a hub 110 of a wind turbine 160 (e.g. via a pitch bearing). The coupling flange 11 may carry a plurality of fasteners which may be adapted to mate with corresponding fasteners, such as holes or similar, at the hub 110 of the wind turbine 160. The fasteners may be e.g. pins, bolts or studs. These fasteners may be introduced particularly in corresponding holes of a pitch bearing ring. Another pitch bearing may be attached to the hub.

The coupling flange 11 may be a circular flange. Further, the coupling flange 11 may be made from two symmetric halves being welded together.

The at least one support element 13a, 13b defines a support plane 16a, 16b for contacting a transport and/or storing surface 200. The support plane 16a, 16b of the support element 13a, 13b may be defined by a flat surface provided on the support element 13. If the support plane 16a is substantially flat, a root portion of a wind turbine blade may be positioned e.g. on a floor or ground surface without the need of any specific cradle or any specifically prepared storage or transportation tool.

As Figure 3 illustrates, the root portion 10 may comprise an outer circumference and the at least one support element may radially extend form said outer circumference of the coupling flange.

Further, the root portion 10 may comprise at least one fastening element 12, including a transportation means and/or handling means 18. The at least one fastening element 12 radially extends from the outer circumference of the coupling flange 11.

The root portion 10 in the example of Figure 3 further comprises two support elements 13a, 13b disposed at diametrically opposite positions to each other at an outer circumference of the coupling flange. Each support element 13 is being fixedly attached to the coupling flange 11. Other examples may comprise different support elements 13 and arrangements thereof, as e.g. shown in Figs. 4A to 4D. The support elements 13 may in some examples be equally distributed around the outer circumference of the coupling flange 11 and may further comprise at least one transportation feature and/or handling feature 14.

The transportation feature and/or handling feature 14, 18 of the at least one fastening element 12 and/or the support elements 16a, 16b may include at least one of the following: a through hole, an undercut, a rail, a counterpart for a gripping tool, a frictional connection means, a threaded hole and/or a groove. In the illustrated example, holes 14, 18 may be used for attachment of lifting equipment, e.g. lifting equipment integrated or attached to a crane. This may enable easier handling and installation of the blade.

The support element(s) 13 may be made from the same material as the coupling flange 11. The material of the support element(s) and the coupling flange may be metallic, such as steel or other metal-based alloys. Further, the support element(s) 13 and the coupling flange 11 may be formed integrally, e.g. by casting. In a further aspect, the coupling flange 11 and the support element(s) may be cut, milled or otherwise machined from a single part, e.g. a metallic base element. Further, the support element(s) may be attached to the flange portion 11 by welding.

The support elements 13a, 13b shown in Figure 3 define two support planes 16a, 16b, wherein a first support plane 16a of the respective support element 13a is contacting a transport and/or storing surface 200. A second support plane 16b is arranged opposite to the first support plane (substantially parallel thereto) and is presently not in use.

The support planes 16a, 16b are defined in this example by flat surfaces provided on the support elements 13a, 13b. Other examples with different support elements 13 exist, wherein at least one support element 13 defines a support plane 16 for contacting a transport and/or storing surface 200. Each of the support elements 13 may be associated with a respective support plane 16. Further, a support plane may be defined by at least two of different support elements. By defining more than one support plane, and particularly at diametrically opposition positions, blades may be positioned or stored in different orientations. In particular, blades may be stacked in different orientations.

The support element 13a may further define an angle 15 of the coupling flange 11 around a central axis 17 of the coupling flange 11, relative to the transport and/or storing surface 200, as the support plane 16a is in contact with the respective transport and/or storing surface 200.

Figures 4A-4D schematically illustrate further examples of root portions 10 and wind turbine blades incorporating support elements 13.

In the example of figure 4A, a single support element 13 may be incorporated in the coupling flange of the root of the wind turbine blade. The support element 13 in this example defines a substantially flat support plane upon which the wind turbine blade can rest. The support plane substantially coincides, at a point, with an outer circumference of the annular mounting surface 11 of the flange. In other words, the support plane is tangential to an outer circumference of the coupling flange 11.

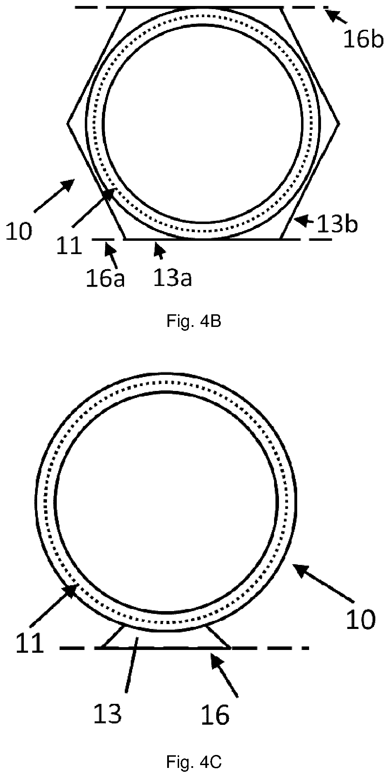

Figure 4B illustrates another example, in which the mounting flange including support elements 13 is symmetric with respect to a horizontal axis passing through a center of the root when the blade is supported on its support plane 16a. In this particular example, the mounting flange is rotationally symmetrical. An outer circumference of the mounting flange in this example is hexagonal.

At least two support planes 16a, 16b are defined by the mounting flange.

In the example of figure 4C, the mounting flange comprises a protrusion 13 protruding beyond annular mounting surface. A support 13 with a substantially triangular shape is provided. The root portion 10 of the wind turbine blade may be supported by support plane 16, forming the base of the triangular shape.

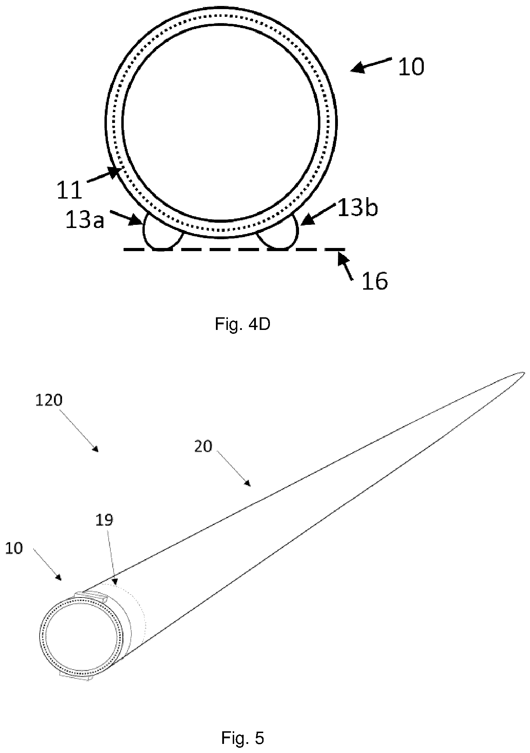

As illustrated in another example in Figure 4D the support plane 16 of the support element 13 may be defined by a first point of support on a first support element 13a and a second point of support provided on a second support element 13b, which is different from the first support element.

Figure 5 illustrates a wind turbine blade 120 comprising a blade root 10 having a coupling flange, configured for coupling the root to a hub of a wind turbine. The coupling flange comprises one or more support elements, which define a substantially flat support area for contacting a transport and/or storing surface.

As may be seen in figure 5, the wind turbine blade 120 may comprise a first support element at a first position, and a second support element at a second position, which is diametrically opposite to the first position.

In some examples, the support elements may be integrally formed with the coupling flange. In some examples, the blade may further comprise a plate, partially closing off an inside of the wind turbine blade. Such a plate may stiffen and reinforce a blade root portion. The plate may comprise one or more manholes allowing access to an interior of the blade.

A blade shell generally defines a leading edge, trailing edge, pressure surface and suction surface may be made of composite material, such as glass fibre composite, carbon fibre composite, or combinations thereof. Further, the mounting flange may be attached to the blade shell as part of a resin infusion or injection process. After curing takes places, the blade shell of composite material is then firmly attached to the coupling flange. The coupling flange includes the aforementioned support elements 13.

The blade may comprise multiple segments that can be coupled to form a respective wind turbine blade 120. The length of the blade portion 20 may be in the range from 30 m to 150 m, or in the range from 50 m to 120 m, or in the range from 60 m to 110 m.

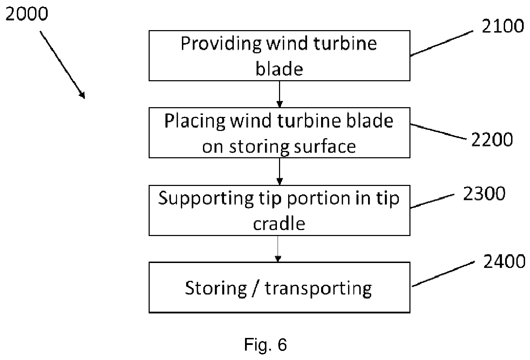

Figure 6 illustrates a flow diagram of a method 2000 for positioning a wind turbine blade 120. The method comprises providing at block 2100 a wind turbine blade including a blade root mounting flange defining an annular mounting surface for mounting the wind turbine blade 120 to a hub of a wind turbine. The blade root mounting flange comprising one or more portions protruding beyond the annular mounting surface.

As noted before, the blade root mounting flange may be attached indirectly to the hub of the wind turbine through a pitch bearing.

The method then comprises placing, at block 2200, the wind turbine blade 120 on a storing surface 200 so as to be supported by the portions of the mounting flange protruding beyond the annular mounting flange.

In some examples, the portions protruding beyond the annular mounting surface define an orientation of the mounting flange 11 relative to a storage surface 200.

The method may further comprise, at block 2300, providing a tip portion of the wind turbine blade on a tip cradle. If the protrusions outside the annular mounting surface of the blade root define a support plane, it can be ensured that the tip portion of the blade is correctly orientated such that it can be positioned within a cradle for supporting the tip portion.

The method may then comprise, at block 2400, transporting the blade, or storing and optionally subsequently transporting the blade. Any suitable transportation device might be used such as e.g. a crane, a truck, a low-loader, a trailer, a towing vehicle a sea container and/or a ship.

After arrival at a site, the blade may be installed on a hub of the wind turbine. The protrusions extending beyond the annular mounting flange of the root do not need to be removed prior to operation of the wind turbine.

In any of the herein disclosed examples, the wind turbine blades may be, but does not need to be, a segmented blade. A segmented blade is a blade in which a root portion and a tip portion (and optionally further blade portions) are manufactured and transported separately. The root portion may then be attached to the tip portion before installation.

In any of the herein disclosed examples, the blades may directly or indirectly be attached to a wind turbine blade hub. An indirect attachment may herein be understood as an attachment with another element in between the blade and the hub, in particular a pitch bearing. More particularly, a pitch bearing may comprise an inner and an outer bearing ring with one or more rows of rolling elements (rollers, balls or other) in between. One of the outer and inner bearing rings may be attached to the hub, and the other of the inner and outer bearing ring may be attached to the wind turbine blade.

Even though some features of fasteners, lifting attachments etc. for handling, and hoisting were only illustrated with respect to figure 3, it should be clear that the same or similar features can also be included in any of the examples of figures 4 and 5.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have fastening elements that do not differ from the literal language of the claims, or if they include equivalent fastening elements with insubstantial differences from the literal languages of the claims. Aspects from the various embodiments described can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

### LIST OF REFERENCE SIGNS

- 10: root portion
- 11: coupling flange
- 12: fastening element including a transportation and/or handling feature
- 13: support element
- 13a: first support element
- 13b: second support element
- 14: transportation and/or handling feature
- 15: rotation angle
- 16: support plane
- 16a: first support plane
- 16b: second support plane
- 17: central axis
- 18: transportation and/or handling means
- 19: attachment line
- 20: blade portion

- 100: pitch bearing
- 107: pitch system
- 108: pinion
- 109: annular gear
- 110: hub of a wind turbine
- 115: rotor
- 120: wind turbine blade (rotor blade)
- 150: support surface
- 160: wind turbine
- 161: nacelle
- 162: generator
- 163: rotor shaft
- 164: gearbox
- 165: support frame
- 166: generator shaft

- 170: tower
- 200: transport and/or storing surface

- 2000: a method for positioning a wind turbine blade
- 2100: providing a wind turbine blade
- 2200: placing the wind turbine blade on a transport and/or storing surface
- 2300: supporting tip portion of blade in tip cradle
- 2400: storing and/or transporting the wind turbine blade

## Claims

1. A root portion (10) for a wind turbine blade (120), comprising:
a coupling flange (11), configured for coupling the root portion to a hub (110) of a wind turbine (160), and
at least one support element (13), fixedly attached to the coupling flange (11),
wherein the at least one support element (13) defines a support plane (16) for contacting a transport and/or storing surface (200),
**characterised in that**
the at least one support element (13) is welded to the coupling flange (11) or
the at least one support element (13) and the coupling flange (11) are integrally formed.

2. The root portion (10) for a wind turbine blade (120) according to claim 1, wherein the coupling flange comprises an outer circumference, and wherein
the support element (13) radially extends from the outer circumference of the coupling flange (11).

3. The root portion (10) for a wind turbine blade (120) according to claim 1 or 2, wherein the support plane (16) of the support element (13) is defined by a flat surface provided on the support element (13).

4. The root portion (10) for a wind turbine blade (120) according to claim 3, wherein the flat surface is tangential to the outer circumference of the coupling flange (11).

5. The root portion (10) for a wind turbine blade (120) according to any of claims 1 - 4, wherein the support plane of the support element (13) is defined by at least one first point of support provided on a first support element (13a) and a second point of support provided on a second support element (13b), which is different from the first support element.

6. The root portion (10) for a wind turbine blade (120) according to any of claims 1 - 5, wherein the root portion comprises multiple support elements (13a, 13b),
wherein at least two support elements (13a, 13b) are disposed diametrically opposite to each other at the outer circumference of the coupling flange (11), or
wherein the support elements (13) are equally distributed around the outer circumference of the coupling flange (11).

7. The root portion (10) for a wind turbine blade (120) according to any of claims 1 - 6, wherein the support element (13) comprises one or more holes configured for attachment to a lifting tool.

8. The root portion (10) for a wind turbine blade (120) according to any of claims 1 - 7, wherein the support element (13) is made from the same material as the coupling flange (11).

9. The root portion (10) for a wind turbine blade (120) according to any of claims 1 - 8, further comprising at least one fastener fixedly attached to the coupling flange and radially extending from the outer circumference of the coupling flange (11), and
optionally wherein the fastener (14, 18) includes at least one of the following: a through hole, an undercut, a rail, a counterpart for a gripping tool, a frictional connection means, a threaded hole and/or a groove.

10. A wind turbine blade (120) comprising a blade root according to any of claims 1 - 9.

11. A method (2000) for positioning a wind turbine blade (120), the method comprising:
providing (2100) a wind turbine blade (120) comprising a blade root mounting flange defining an annular mounting surface for mounting the wind turbine blade (120) to a hub of a wind turbine, the blade root mounting flange comprising one or more portions protruding beyond the annular mounting surface and
placing (2200) the wind turbine blade (120) on a storing surface (200) so as to be supported by the portions of the mounting flange protruding beyond the annular mounting flange,
**characterised in that**
the one or more portions protruding beyond the annular mounting surface are welded to the blade root mounting flange or
the one or more portions protruding beyond the annular mounting surface and the blade root mounting flange are integrally formed.

12. The method according to claim 11, wherein the portions protruding beyond the annular mounting surface define an orientation of the mounting flange (11) around a central axis (17), relative to a storage surface (200).

13. The method according to claim 11 or 12, further comprising providing a tip portion of the wind turbine blade on a tip cradle.

## Patentansprüche

1. Wurzelabschnitt (10) für ein Windturbinenblatt (120), umfassend:
einen Kopplungsflansch (11), der zum Koppeln des Wurzelabschnittes mit einer Nabe (110) einer Windturbine (160) konfiguriert ist, und
mindestens ein Stützelement (13), das fest an dem Kupplungsflansch (11) angebracht ist,
wobei das mindestens eine Stützelement (13) eine Stützebene (16) für den Kontakt mit einer Transport- und/oder Stützfläche (200) definiert,
**dadurch gekennzeichnet, dass**
das mindestens eine Stützelement (13) mit dem Kupplungsflansch (11) verschweißt ist oder
das mindestens eine Stützelement (13) und der Kupplungsflansch (11) einstückig ausgebildet sind.

2. Wurzelabschnitt (10) für ein Windturbinenblatt (120) nach Anspruch 1, wobei der Kupplungsflansch einen Außenumfang aufweist, und wobei
das Stützelement (13) sich radial von dem Außenumfang des Kupplungsflansches (11) erstreckt.

3. Wurzelabschnitt (10) für ein Windturbinenblatt (120) nach Anspruch 1 oder 2, wobei die Stützebene (16) des Stützelements (13) durch eine ebene Fläche definiert ist, die auf dem Stützelement (13) vorgesehen ist.

4. Wurzelabschnitt (10) für ein Windturbinenblatt (120) nach Anspruch 3, wobei die ebene Fläche tangential zum Außenumfang des Kupplungsflansches (11) verläuft.

5. Wurzelabschnitt (10) für ein Windturbinenblatt (120) nach einem der Ansprüche 1 bis 4, wobei die Stützebene des Stützelements (13) durch mindestens einen ersten Stützpunkt, der an einem ersten Stützelement (13a) vorgesehen ist, und einen zweiten Stützpunkt, der an einem zweiten Stützelement (13b) vorgesehen ist, das sich von dem ersten Stützelement unterscheidet, definiert ist.

6. Wurzelabschnitt (10) für ein Windturbinenblatt (120) nach einem der Ansprüche 1 bis 5, wobei der Wurzelabschnitt mehrere Stützelemente (13a, 13b) umfasst,
wobei mindestens zwei Stützelemente (13a, 13b) diametral gegenüberliegend am Außenumfang des Kupplungsflansches (11) angeordnet sind, oder
wobei die Stützelemente (13) gleichmäßig um den Außenumfang des Kupplungsflansches (11) verteilt sind.

7. Wurzelabschnitt (10) für ein Windturbinenblatt (120) nach einem der Ansprüche 1 bis 6, wobei das Stützelement (13) ein oder mehrere Löcher aufweist, die zur Befestigung an einem Hebewerkzeug konfiguriert sind.

8. Wurzelabschnitt (10) für ein Windturbinenblatt (120) nach einem der Ansprüche 1 bis 7, wobei das Stützelement (13) aus demselben Material wie der Kupplungsflansch (11) hergestellt ist.

9. Wurzelabschnitt (10) für ein Windturbinenblatt (120) nach einem der Ansprüche 1 bis 8, ferner umfassend mindestens ein Befestigungselement, das fest an dem Kupplungsflansch angebracht ist und sich radial von dem Außenumfang des Kupplungsflansches (11) erstreckt , und
wobei das Befestigungselement (14, 18) optional mindestens eines der folgenden Merkmale aufweist: ein Durchgangsloch, eine Hinterschneidung, eine Schiene, ein Gegenstück für ein Greifwerkzeug, ein Reibschlussmittel, ein Gewindeloch und/oder eine Nut.

10. Windturbinenblatt (120) mit einer Blattwurzel nach einem der Ansprüche 1 bis 9.

11. Verfahren (2000) zum Positionieren eines Windturbinenblatts (120), wobei das Verfahren umfasst:
Bereitstellen (2100) eines Windturbinenblatts (120) mit einem Blattwurzel-Befestigungsflansch, der eine ringförmige Befestigungsfläche zum Befestigen des Windturbinenblatts (120) an einer Nabe einer Windturbine definiert, wobei der Blattwurzel-Befestigungsflansch einen oder mehrere Abschnitte umfasst, die über die ringförmige Befestigungsfläche hinausragen, und
Platzieren (2200) des Windturbinenblatts (120) auf einer Stützfläche (200), so dass es von den Abschnitten des Befestigungsflansches, die über den ringförmigen Befestigungsflansch hinausragen, getragen wird,
**dadurch gekennzeichnet, dass**
der eine oder die mehreren Abschnitte, die über die ringförmige Montagefläche hinausragen, mit dem Blattwurzel-Befestigungsflansch verschweißt sind oder
der eine oder die mehreren über die ringförmige Montagefläche hinausragenden Abschnitte und der Blattwurzel-Befestigungsflansch einstückig ausgebildet sind.

12. Verfahren nach Anspruch 11, wobei die über die ringförmige Montagefläche hinausragenden Abschnitte eine Ausrichtung des Montageflansches (11) um eine Mittelachse (17) relativ zu einer Ablagefläche (200) definieren.

13. Verfahren nach Anspruch 11 oder 12, ferner umfassend das Bereitstellen eines Spitzenabschnitts des Windturbinenblatts auf einer Spitzenwiege.

## Revendications

1. Section de racine (10) pour une pale d'éolienne (120), comprenant :
une bride d'accouplement (11), configurée pour accoupler la section de racine à un moyeu (110) d'une éolienne (160), et
au moins un élément de support (13), fixé de manière fixe à la bride d'accouplement (11),
dans lequel l'au moins un élément de support (13) définit un plan de support (16) destiné à entrer en contact avec une surface de transport et/ou de stockage (200), **caractérisé par le fait que**
l'au moins un élément de support (13) est soudé à la bride d'accouplement (11) ou
l'au moins un élément de support (13) et la bride d'accouplement (11) sont formés d'un seul tenant.

2. Section de racine (10) d'une pale d'éolienne (120) selon la revendication 1, dans laquelle la bride d'accouplement comprend une circonférence extérieure, et dans laquelle
l'élément de support (13) s'étend radialement à partir de la circonférence extérieure de la bride d'accouplement (11).

3. Section de racine (10) pour une pale d'éolienne (120) selon la revendication 1 ou 2, dans laquelle le plan de support (16) de l'élément de support (13) est défini par une surface plane fournie sur l'élément de support (13).

4. Section de racine (10) pour une pale d'éolienne (120) selon la revendication 3, dans laquelle la surface plane est tangentielle à la circonférence extérieure de la bride d'accouplement (11).

5. Section de racine (10) pour pale d'éolienne (120) selon l'une des revendications 1 à 4, dans laquelle le plan de support de l'élément de support (13) est défini par au moins un premier point de support fourni sur un premier élément de support (13a) et un second point de support fourni sur un second élément de support (13b), qui est différent du premier élément de support.

6. Section de racine (10) d'une pale d'éolienne (120) selon l'une des revendications 1 à 5, dans laquelle la section de racine comprend plusieurs éléments de support (13a, 13b),
dans lequel au moins deux éléments de support (13a, 13b) sont disposés diamétralement à l'opposé l'un de l'autre sur la circonférence extérieure de la bride d'accouplement (11), ou
dans lequel les éléments de support (13) sont également répartis autour de la circonférence extérieure de la bride d'accouplement (11).

7. Section de racine (10) d'une pale d'éolienne (120) selon l'une des revendications 1 à 6, dans laquelle l'élément de support (13) comprend un ou plusieurs trous configurés pour la fixation d'un outil de levage.

8. La section de racine (10) d'une pale d'éolienne (120) selon l'une des revendications 1 à 7, dans laquelle l'élément de support (13) est fabriqué dans le même matériau que la bride d'accouplement (11).

9. La section de racine (10) pour une pale d'éolienne (120) selon l'une des revendications 1 - 8, comprenant en outre au moins une fixation attachée de manière fixe à la bride d'accouplement et s'étendant radialement à partir de la circonférence extérieure de la bride d'accouplement (11), et
éventuellement, dans lequel l'élément de fixation (14, 18) comprend au moins l'un des éléments suivants : un trou traversant, une contre-dépouille, un rail, une contrepartie pour un outil de préhension, un moyen de liaison par friction, un trou fileté et/ou une rainure.

10. Pale d'éolienne (120) comprenant une section de racine selon l'une quelconque des revendications 1 à 9.

11. Procédé (2000) de positionnement d'une pale d'éolienne (120), consistant à
fournir (2100) une pale d'éolienne (120) comprenant une bride d'accouplement de racine de pale définissant une surface de montage annulaire pour monter la pale d'éolienne (120) sur le moyeu d'une éolienne, la bride de montage de pied de pale d'accouplement de racine de pale comprenant une ou plusieurs parties dépassant de la surface de montage annulaire et
placer (2200) la pale d'éolienne (120) sur une surface de stockage (200) de manière à ce qu'elle soit supportée par les parties de la bride de montage faisant saillie au-delà de la bride de montage annulaire,
**caractérisé par le fait que**
la ou les parties dépassant de la surface de montage annulaire sont soudées à la bride de montage de la racine de pale ou
la ou les parties dépassant la surface de montage annulaire et la bride de montage de la racine de pale sont formées d'un seul tenant.

12. Procédé selon la revendication 11, dans lequel les parties dépassant de la surface de montage annulaire définissent une orientation de la bride de montage (11) autour d'un axe central (17), par rapport à une surface de stockage (200).

13. Procédé selon la revendication 11 ou 12, comprenant en outre la fourniture d'une partie de l'extrémité de la pale d'éolienne sur un berceau d'extrémité.
